# EUROPEAN PATENT SPECIFICATION

(11) **EP 0 400 432 B1**
(45) Date of publication and mention of the grant of the patent: **23.11.1994**
(21) Application number: 90109541.4
(22) Date of filing: 19.05.1990
(51) Int. Cl.: B60T 17/04

(54) **Device for providing hydraulic connection and control between a tractor operating circuit and the braking system of a trailer**
Gerät zum Herstellen einer hydraulischen Verbindung und zum Steuern zwischen einem Traktor-Arbeitskreis und dem Bremssystem eines Anhängers
Dispositif pour établir une connexion et une commande entre un circuit de travail et le système de freinage d'une remorque

(30) Priority: 02.06.1989 IT 2076389; 16.06.1989 IT 2090489
(43) Date of publication of application: 05.12.1990
(73) Proprietor: Paganini, Atanasio, 42017 Novellara (Reggio Emilia) (IT)
(72) Inventor: Paganini, Atanasio, 42017 Novellara (Reggio Emilia) (IT)
(74) Representative: Luksch, Giorgio, Dr.-Ing.

(56) References cited:
- DE-A- 3 406 271
- DE-A- 3 412 345
- DE-A- 3 444 156
- GB-A- 2 088 982

## Description

This invention relates to a device for providing hydraulic connection and control between a circuit incorporating a pump and receiver and pertaining to a tractor, and the braking system of a trailer, according to the preamble of the attached main claim.

A tractor is known to generally comprise a braking circuit and a supplementary hydraulic circuit. The braking circuit controls the usual wheel brakes using vegetable oil. The braking fluid is pressurized on pressing usual pedals present in the tractor cab. The supplementary hydraulic circuit uses mineral oil, which is also used for the usual gearbox members. This oil is pressurized by a pump. This supplementary hydraulic circuit is used to operate the braking system of a trailer when this is connected to the tractor, the operation being servo-activated by pressing said brake pedal or pedals.

To obtain this servo-operation of the trailer braking circuit and prevent any mixing of the two types of oil (the different use of these oils is determined by known technical and operational reasons), a distributor member is used. The two types of oil circulate through this along separate ducts. These ducts or rather the braking circuit and the supplementary hydraulic circuit interact via mechanical means (such as cocks and pistons) such that when the brake pedal is pressed, there is a corresponding action on the mineral oil circuit to enable it to feed the braking circuit of the trailer when this is connected to the tractor.

The problem which arises with such known arrangements is that this action on the mineral oil part of the circuit (and thus the operation of the pump provided in this circuit) occurs whether or not the trailer is connected to the tractor.

In this latter case, the supplementary hydraulic circuit is pressurized each time the tractor brakes are operated, even if the trailer is not connected. This results in overheating of the oil present in said circuit. In addition the operation of the pump when not required not only increases its use and therefore shortens its life, but also results in a loss of power of the tractor engine (which also operates the pump), which is very inconvenient especially in those cases in which the tractor requires all the available power to move.

DE-A-34 44 156 discloses a pneumatic circuit for activating the pneumatic braking system of a trailer said circuit being sensitive to the operation of the braking system of the tractor.
The pneumatic circuit is so designed that two different kinds of trailers can be attached to the tractor. One trailer kind comprises a two-line braking system and the other kind a one-line braking system and the pneumatic circuit includes a valve arrangement for selectively and automatically enabling the pneumatic circuit to the particular kind of trailer attached to the tractor. Apart from the fact that the use of pneumatics in braking involves complex arrangements (like reservoirs in the tractor as well as in the trailer, conducts and specific valves) and air-losses (in debraking the pressurized air used in braking is discharged to the atmosphere) the here discussed prior art pertains to a different genus as the invention (which relates to hydraulic braking) and does not suggest or teach how to avoid a useless and dangerous pressurization of a pump circulating a braking liquid on applying the tractor brakes when the trailer is not connected.

GB-A-2 088 982 refers to a fail-safe hydraulic trailer brake system avoiding unimpairing operational reliability of the towed and towing vehicles and the danger of road fouling by escaping hydraulic fluid. The known system comprises a tank, a constant pressure pump connected to the reservoir, a reservoir connected to the pump via a one-way valve, a brake valve connected with the pump and also with the accumulator via a first line, said brake valve intercepting said first line in the absence of a braking action and connecting a branch line with the reservoir via an adjustable one-way valve. The branch line includes a pressure controlled shut-off valve and coupling. All of the listed means pertains to the tractor. The trailer braking circuit comprises a coupling and a line where a pressure controlled shut-off valved is located. This known solution is intended for a different purpose as that of the invention and is thus operatively and constructively different from the invented one. Apart from the fact that the use of the reservoir involves cost and space problems, each time the brake valve is operated (the trailer being not connected) there is the need of reestablishing pressure in the reservoir via the pump.

An object of the present invention is therefore to provide a device which enables the pump of the mineral oil part of the circuit to operate only when required, ie when the trailer is connected, thus obviating the drawbacks of distributors of the state of the art.

This and further objects which will be more apparent to the expert of the art are attained by a device as defined in the characterising part of the accompanying claims.

The present invention will be more apparent from the accompanying drawing, which is provided by way of non-limiting example only and in which:
Figure 1 is a longitudinal section through a device constructed in accordance with the invention;
Figure 1A is a section on the line IA-IA of Figure 2 when the cock is in the position shown in Figure 1;
Figure 1B is a section on the line IB-IB when the cock is in the position shown in Figure 1;
Figure 2 is a partly sectional end view of the device of Figure 1;
Figure 3 is a view similar to Figure 1 but with the device applied to a trailer coupling and shown during a certain stage of use;
Figure 4 is a view similar to Figure 1, but with the device shown in a different stage of use;
Figures 4A and 4B are sections on the lines IA-IA and IB-IB respectively, when the cock is in the position shown in Figure 4;
Figure 5 shows a different embodiment of the device of Figure 1;
Figure 6 shows a further embodiment of the device of Figure 1 when in its initial position;
Figure 7 is a cross-section through a different embodiment of the device of the invention;
Figure 8 is a cross-section through a further embodiment of the device of Figure 7;
Figure 9 is a cross-section through a further embodiment of the device of Figure 7;
Figure 10 is a cross-section through a modification of the device of Figure 9;
Figure 11 is a cross-section through a further embodiment of the device of Figure 7; and
Figure 12 shows a modification of the device of Figures 1 to 3.

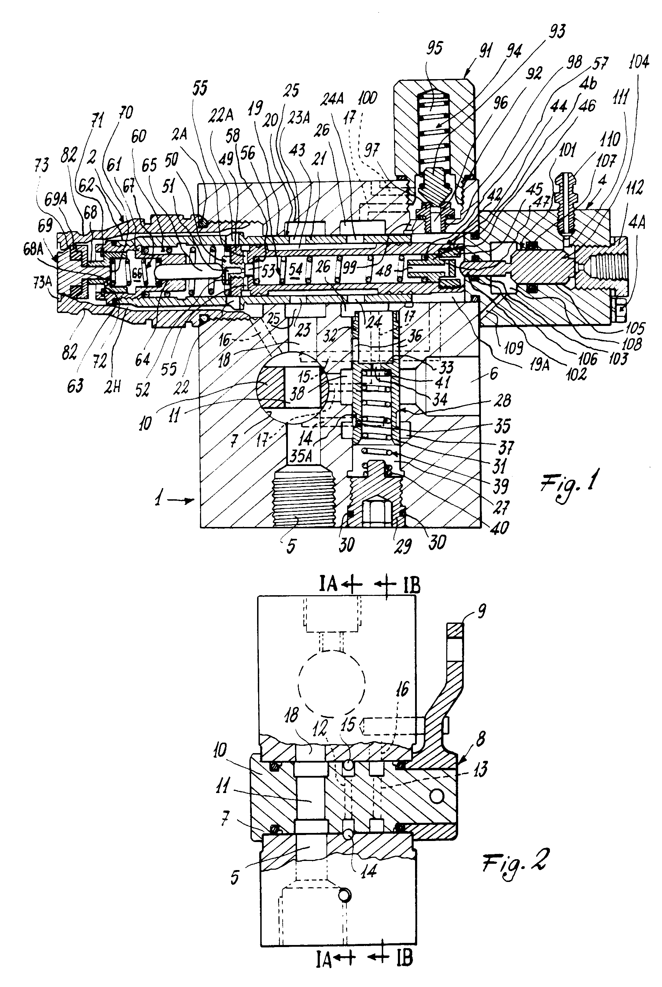

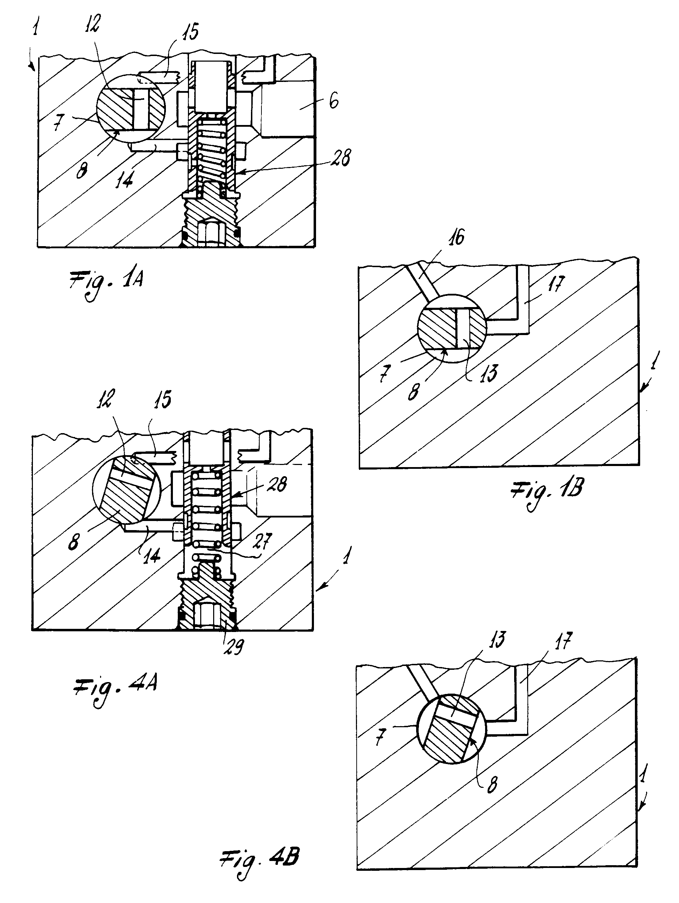

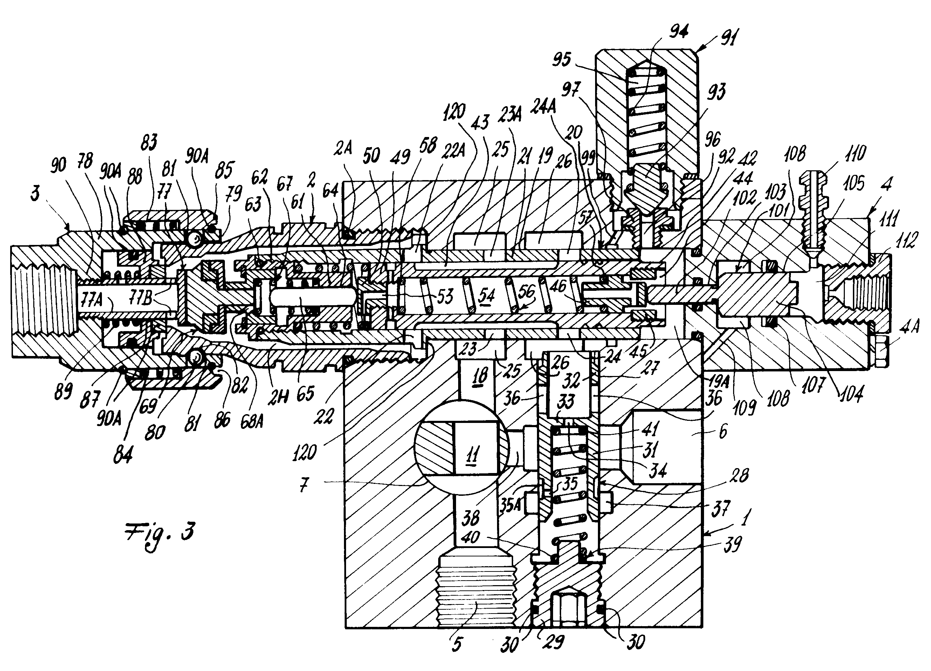

With reference to Figures 1 to 3, the device according to the invention comprises, in the embodiment shown in said figures, a body 1, a quick connector 2 provided with the usual seal members 2A, said member 2 being fixed to the body 1 by screwing and being arranged to cooperate with a coupling 3 (visible in Figure 3) connected to a conventional hydraulic braking circuit of a trailer (not shown). The device also comprises a block 4 for its connection to that part of the hydraulic braking of a tractor (not shown) comprising the fluid (vegetable oil) which when pressurized operates the vehicle brakes, said block being fixed to the body 1 by usual screws 4A. Seal members 4B are provided between the block 4 and body 1.

The body 1 comprises an entry duct 5 and an exit duct 6 which are connected to another part of the tractor hydraulic circuit comprising fluid (mineral oil) used not only for braking the trailer but also for lubricating the tractor transmission. Specifically, the entry duct 5 is connected to a usual pump (not shown) and the exit duct 6 is connected to a usual receiver (not shown) from which the pump withdraws the fluid, or to another user such as a hydraulic lift.

The entry duct 5 opens into a seat 7 in the body 1, this seat containing a rotary member or cock 8 operated by the usual handbrake of the tractor. The cock 8 (see specifically Figure 2) comprises an arm 9 on the outside of the device and associated with the cock body 10, this body being inserted into the seat of the device and provided with ducts 11, 12, 13. The duct 11 is positioned in correspondence with the entry duct 5 whereas the ducts 12 and 13 are positioned to correspond with ducts 14, 15 and 16, 17 provided in the body 1 of the device. Although the ducts 14, 15, 16, 17 (shown in Figures 1A and 1B respectively) are arranged in different planes preceding the plane of the sectional view shown in Figure 1, they are shown by dashed lines in this figure. They are however not shown in Figures 2, 3, 4 and 5. The duct 16 connects the seat 7 to the quick connector 2 (see Figure 1B).

From the seat 7 there extends a further duct 18 coaxial to the entry duct 5 and terminating in a chamber 19 containing a hollow member or casing 20 provided in its wall 21 with apertures 22, 22A, 23, 23A, 24, 24A. The apertures 23, 23A, 24, 24A are positioned to correspond with annular recesses 25 and 26 in the body 1.

Into the recess 26 there opens a cavity 27 comprising a servovalve 28, said cavity communicating with the exit duct 6. The cavity 27 is closed at its free end by a plug 28 with which seal members 30 are associated. Said duct 14 extends from said cavity.

The servovalve 28 comprises two substantially cup-shaped sections 31 and 32 separated by a wall 33 comprising a hole 34. Holes 35 and 36 are also provided in the walls of said sections 31 and 32, the hole 35 opening into an annular recess 35A in the servovalve 28.

Said cavity 27 also comprises an annular recess 37, and from the cavity there also extend the duct 14 and a duct 38, which terminates at the seat 7 (housing the cock 8) and is connected to the exit 6.

A spring 39 is also located in the cavity 27 and rests at one end 40 against the plug 29 and at its other end 41 against the wall 33.

The casing 20 located in the chamber 19 of the body 1 houses a hollow piston 42 having an annular recess 43. The piston also comprises at one open end 44 an internal ring nut 45 against which there rests an element 46 provided with an axial duct 48 and a transverse duct 47. Into the other end 49, which is also open, there is screwed an element 50 provided with an axial duct 51 and a radial duct 52, the duct 51 opening into a duct 53 terminating in the cavity 54 of the piston 42. Into this latter duct there also open ducts 55 arranged in radial formation at the end 49 of said piston. In the piston cavity 54 there is provided a compression spring 56 the ends 57 and 58 of which rest against the element 46 and the end 49 respectively.

Against the end 49 of the piston 42 there rests one end of a spring 60 positioned external to said piston, its other end resting against an annular external step on a member 61 which is screwed into one end 62 of the casing 20. Seal members 63 are provided at the connection threads.

The end 62 of the casing 20 is positioned in the quick connector 2. A free mobile element 65 is provided in a channel 64 of the member 61 in the quick connector, and rests against the element 50.

The channel 64 opens into a cavity 66 in the member 61, this cavity being substantially of cup shape with parts of different section. The cavity 66 houses a compression spring 67 resting at one end against the member 61 and at its other end against a support 68 on a headpiece 69 composed of several elements substantially insertion-fitted together and provided with seal members 69A, said support being of cup shape. The spring 67 is partly inserted into said cup and rests against its inner part 70.

The support 68 is retained in the cavity 66 of the member 61 by an annular stop 71 (consisting of an annular ring 71 or the like) cooperating with an outer step 72 on said support. In said support there is provided a channel 68A which connects the cavity 66 to the chamber 2H of the quick connector 2. The headpiece 69 initially rests against the end 73 of the quick connector 2, provided with an aperture 73A, if no trailer is connected to the tractor.

With reference to figure 3, the coupling 3 is snap-fitted to the quick connector 2. In this respect, the coupling comprises a casing 78 provided at one end 79 with balls 80 positioned in suitably shaped seats. These balls cooperate with recesses 82 provided on the outside of the body 81 of the connector 2.

The balls 80 are subjected to the pressing action of an outer sleeve 83 mobile against a spring 84 and having a free end 85 provided with a lead-in 86 for retaining the balls within the casing 78 when the sleeve is pulled to disengage the coupling 3 from the quick connector 2.

The coupling 3 comprises internally a hollow projecting means 77 (rigid with the casing 78) which is provided in its stem 77A with apertures 77B and is inserted into a passage 87 in a body 88 mobile against a spring 89, this spring being positioned between said body 88 and a shoulder 90 within the casing 78. Usual seal means are provided to prevent leakage of pressurized fluid.

The body 1 of the device comprises a valve 91 screwed into an aperture 92 in said body.

The valve 91 is set to keep the fluid fed to the trailer pressurized, this pressure (for example 10 atmospheres) being generated by said pump (not shown), together with the action of the servovalve 28.

The valve 91 comprises a valving member 93 subjected to the action of a compression spring 94 positioned in a chamber 95 of this valve, the spring maintaining contact between said valving member and a duct 96 in an element 97 screwed into a hole which connects an end section 19A of the chamber 19 to the aperture 92. In this manner the member 93 closes said hole. Said duct 17 (extending from the seat 7 as shown in Figure 1B) extends to said chamber 95, and said duct 15 (extending from the seat 7 as shown in Figure 1A) extends to said section 19A.

The aperture 92 and thus the valve 91 are also exposed to a channel 99 originating from the chamber 19, said duct 17 and a channel 100 which connects the aperture 92 to an exit line (not shown) connected to said receiver.

The hollow piston 42 is subjected to the pressing action of a double-bodied piston 101 associated with the mouth 4. This action on the piston is exerted indirectly via said element 46 and spring 56.

The piston 101 has that end 102 of smaller cross-section mobile within a hole 103 in the block 4 and that end 104 of greater cross-section mobile within a hole 105 in said block. Suitable gaskets 106 and 107 respectively are provided at said holes to prevent any mixing between the different fluids (mineral oil and vegetable oil) present in the different parts of the tractor braking circuit to which the body 1 and block 4 are connected respectively. The holes 103 and 105 in the block 4 are separated by a chamber 108 from which a channel 109 extends to terminate at the periphery of the block 4 in contact with the body 1. This channel allows bleeding of any air present in the braking circuit to which the block 4 is connected and reaching the chamber 108. There is also provided a further vent valve 110 of known type connected to a chamber 111 in the block 4 into which there is screwed a known connection element 112 for connection to the tractor braking circuit.

It will now be assumed that a device such as that described is to be connected into a braking circuit of a tractor to which no trailer is connected. In this situation, the casing 20 is displaced to the left and the headpiece 69 is in contact with the end 73 of the quick connector 2. The hole 73A is therefore closed.

Under these circumstances, the braking fluid in that part of the circuit comprising the pump (which is in operation) penetrates into the body 1 via the entry port 5 and passes through the duct 11 in the cock 8, the duct 18 and the recess 25 in the body 1, the apertures 23 and 23A in the casing 20, the recess 43 in the piston 42, the apertures 24 and 24A in the casing 20, the recess 26 in the body 1, the hollow section 32 of the servovalve and the holes 36 which at least partly face the exit duct 6. The fluid flows from the exit duct 6 and into for example the receiver. The fluid cannot enter the seat 7 from the duct 38 because this duct is closed by the body 10 of the cock 8.

The braking fluid also passes through the hole 34 and the ducts 14, 12, 15 to reach the space 19A below the valve 91, which remains closed.

The fluid also occupies the channels 47, 48, the space 54, the channels 53, 55, 51, 52 and the space behind the member 61. The pressure of the braking fluid is therefore determined by the setting of the servovalve 28 and cannot exceed the set value of the valve 91.

When the tractor brake pedals are pressed, the fluid in that part of the vehicle braking circuit connected to the block 4 urges the double-bodied piston 101 so that its end 102 acts against the element 46 in the piston 42.

This action compresses the spring 60 and displaces the piston 42 towards the left within the casing 20.

It will now be assumed that the trailer is connected to the tractor by engaging the coupling 3 with the quick connector 2 of the device 1 and that the braking fluid occupies the trailer braking circuit. In this situation, shown in Figure 3, the pusher means 77 acts on the headpiece 69, which moves to compress the spring 67, which thus acts on the member 61. In this manner said member is subjected to a thrust which is transmitted to the casing 20, which moves towards the block 4 to abut against a step 120 on the body 1 of the device.

If the tractor brakes are now operated (with the pump in operation), the movement of the double piston 101 causes the piston 42 to move within the casing 20. Consequently, the apertures 24, 24A are closed.

The pressure rises (the servovalve 28 being cut out) and is transmitted from the recess 43 to the apertures 22 and 22A in the casing 20, to the chamber 2H of the quick connector 2, to the aperture 73A, to the apertures 77B and to the cavity in the stem 77A of the pusher means associated with the coupling 3. From this cavity the pressure pressurizes the trailer braking circuit.

The servovalve 28, now inoperative, is subjected in practice only to the thrust of the spring 39 and rises to a position in proximity to the recess 26 in the body 1.

With the trailer connected, when braking terminates the piston 42 returns towards the block 4 and the braking fluid again circulates in the same manner as if the trailer were not connected to the tractor. However, as the space 2H is now connected to the trailer braking circuit and, as stated, this space is at the pressure existing in the space 19A as controlled by the servovalve 28, the trailer braking circuit is maintained at a pressure ensuring no action on the brakes.

In this respect, it is well known that if the trailer braking circuit is maintained at a certain predetermined pressure (for example 10 atm), the trailer wheel brakes do not operate. However at higher pressures the brakes operate and the wheels are blocked when the circuit has discharged.

On termination of braking, the piston 42 returns towards the block 4 and the ducts 55 in its end 49 are positioned to correspond with the apertures 22 and 22A in the casing 20. Pressure is transmitted from the chamber 2H of the quick connector 2 via these apertures to the duct 53 and hence to the cavity 54 from which it is transmitted via the ducts 48 and 47 of the element 46 into the section 19A of the chamber 19. A high pressure is created here to open the valving member 93 of the valve 91 so that the fluid passes through said valve from the duct 96 in the element 97 to enter the duct 100 and discharge into the receiver.

If the pressure reaches too high a value during the trailer braking, the element 65 moves towards the right by an amount such as to displace the piston 42 until its recess 43 connects the ducts 23 and 23A to the ducts 24 and 24A, so reducing the pressure in the trailer circuit.

The piston 42 can move towards the right to discharge the oil by the compression of the spring 56. The spring 56 defines the maximum trailer braking pressure.

This makes it possible to discharge any too high pressure in the trailer braking circuit, to modulate the braking (because in fact the piston 42 presses against the double piston 101 via the element 46 against the pressure exerted by the brake pedals on the tractor circuit fluid), to balance the pressures at the trailer fluid discharge and, in the case of sudden braking, to enable the trailer to brake before the tractor, with obvious advantages.

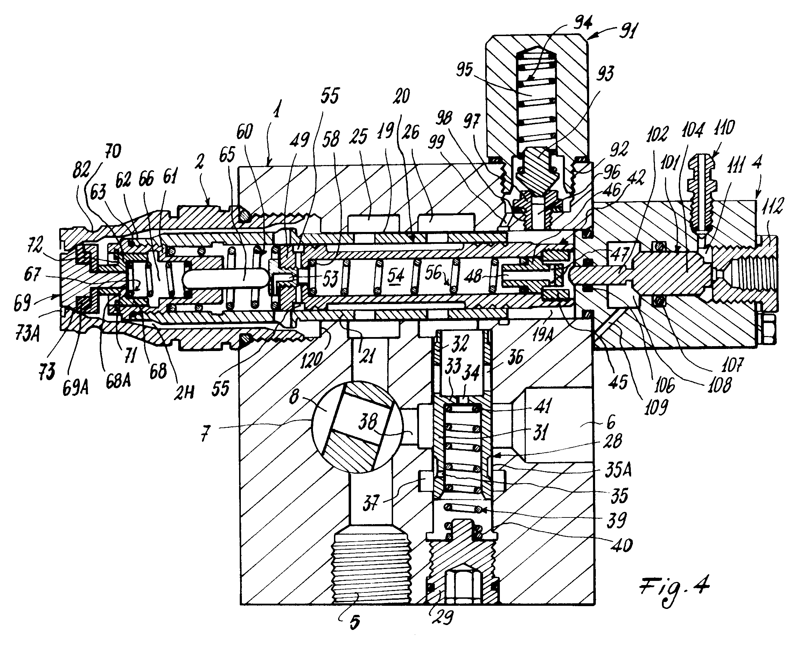

Figures 4, 4A and 4B show a situation involving the operation of the usual tractor handbrake. In these figures, parts corresponding to those of the preceding figures are indicated by the same reference numerals.

Operating the handbrake lever 9 causes the cock 8 to rotate in the seat 7. This rotation causes:
a) (Figure 4) intercepting and closure of the duct 18 in the body 1 and the connection of the pump to the duct 38;
b) (Figure 4A) separation of the ducts 14 and 15;
c) (Figure 4B) connection of the duct 16 to the duct 17.

In this situation, the fluid originating from the duct 5 under the action of the pump connected to it emerges directly from the duct 6 (Figure 4). Thus fluid no longer enters the chamber 19 of the body 1. In addition, in the described situation the pressurized fluid from the trailer still connected to the tractor discharges into the chamber 2H of the quick connector 2, and (see Figure 4B) passes through the duct 16 in the body 1, the duct 13 in the cock 8 and the duct 17 into the duct 100 which leads to the receiver.

The situation represented enables the pressure within the trailer braking circuit to be discharged while the trailer is still connected to the tractor, and its movement to be halted.

After the trailer has been removed, the casing 20 moves within the chamber 19 towards the end 73 of the quick connector 2 by the action of the springs 67 against the headpiece 69, the action of the spring 60 against the member 61 and the action of the fluid in the section 19A of said chamber 19. This movement frees the channel 99, through which the pressurized fluid discharges passing directly to the duct 100. In this manner there is the advantage that when the trailer has been removed the pump does not have to maintain the 10 atm pressure, with resultant lesser heating of the oil.

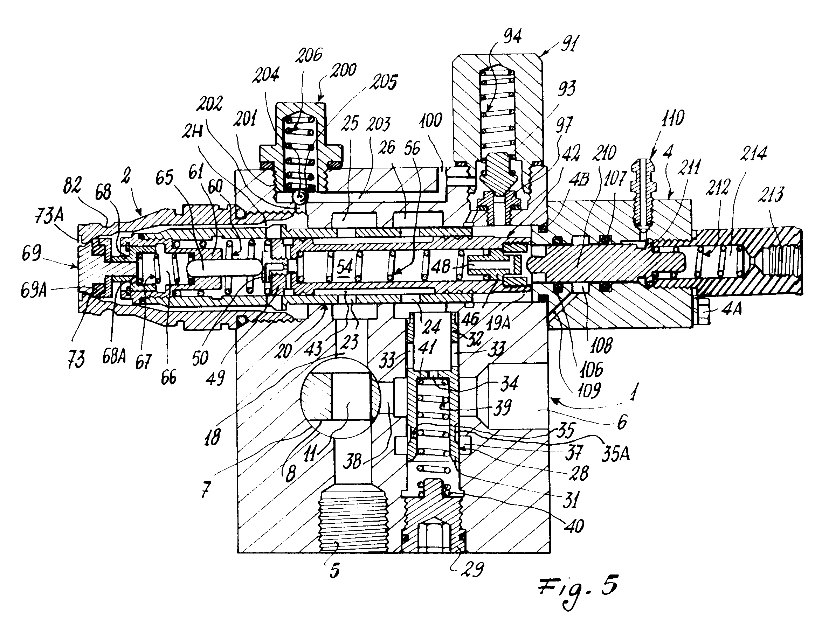

Figure 5 shows a different embodiment of the device of Figure 1. In this figure, parts corresponding to those of the preceding figures are indicated by the same reference numerals.

This embodiment differs from the preceding embodiment in that it comprises a further valve 200 screwed into an aperture 201 in the device body 1, and from which ducts 202 and 203 communicate with the chamber 2H of the quick connector 2 and with the discharge duct 100 respectively. The valve 200 comprises a ball 204 supported by a base 205 on which a spring 206 acts, the ball 204 closing the ducts 202 and 203 to prevent their connection.

The valve 200 operates when a high pressure (overpressure) exists within the trailer braking circuit, and which could impair the mechanical tightness of the circuit. This pressure urges the braking fluid into the chamber 2H of the quick connector 2. From this chamber the fluid passes through the duct 202 to act on the ball 204 and open the connection between said duct and the duct 203. The fluid then passes into this latter and discharges into the receiver, so discharging the pressure in the trailer braking circuit.

The device of Figure 5 also comprises a piston 210 associated with the block 4 instead of the double-bodied piston shown in Figures 1 to 4. The piston 210 comprises a collar 211 subjected to the action of a compression spring 212, the piston also being subjected to the fluid pressure of the vegetable oil part of the tractor braking circuit reaching the block 4 via a channel 213. This channel terminates in a cavity 214 housing said spring 212. This embodiment enables the trailer to be rapidly unblocked as soon as it is connected to the tractor.

In this respect, as soon as the trailer is connected, the piston 210, still without fluid at the exit 73A of the quick coupling 2, acts on the element 46 and thus, in the described manner, on the piston 42 which moves within the casing 20 towards the left. In this manner communication between the recess 25 in the body 1 which receives the pressurized fluid from the duct 5 and the apertures 22 and 22A is rapidly achieved (via the recess 43 in the piston 42), with consequent passage of pressurized fluid to the chamber 2H of said connector. This fluid pressurizes (to 10 atmospheres) the trailer braking circuit, so unblocking it.

Once the trailer circuit is at its operating pressure, the fluid present in the section 19A of the chamber 19 acts on the piston 210 to return it into to the block 4 and enable the device to be used as previously described.

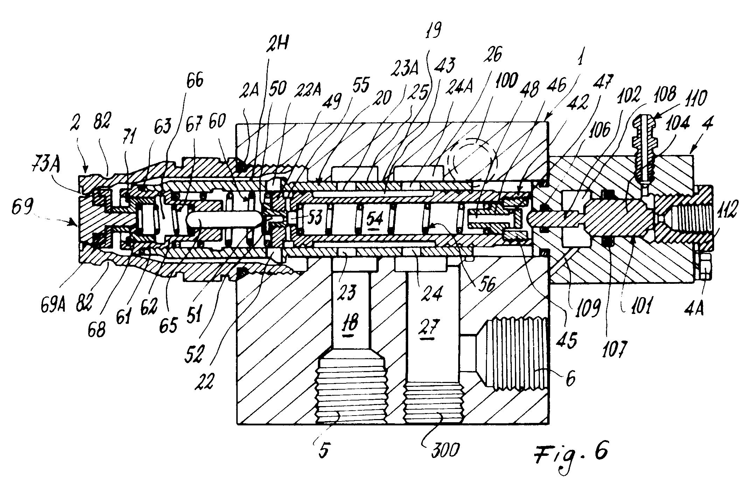

Figure 6 shows a further modification of the device shown in Figure 1. Corresponding parts in these figures are indicated by the same reference numerals.

Figure 6 shows a device in which the fluid fed to the trailer does not have to be put under pressure even when the brakes are not operated. The servovalve 28 and valve 91 are therefore absent. The cavity 27 is still connected to the exit 6. The cavity 27 can be closed at its end 300 by a sealed plug, not shown.

The operation of this device is totally similar to that described with reference to figure 1. In particular, the pressurized liquid throughput leaving the aperture 73A of the quick connector 2 (and thus the pressurization of the trailer braking circuit) is proportional to the thrust exerted on the tractor brake pedal, the maximum value being defined by the spring 56 located in the piston 42.

A device constructed in accordance with the invention enables pressurized fluid to be fed by a pump to a trailer braking circuit only when the trailer is connected to the tractor. If it is not connected, the pump of the tractor hydraulic circuit does not pressurize when the tractor brakes are operated, with the result that there is no pump wear and no oil overheating.

The device described in the preceding figures performs both the quick connector and distributor function in a new and original manner.

In the figures described hereinafter the distributor function is performed by a conventional distributor and the quick connector function by different member which also acts as a control means, ie a means which enables the trailer braking circuit to be set for receiving the braking signal, with the pump attaining the required braking pressure when this signal is present.

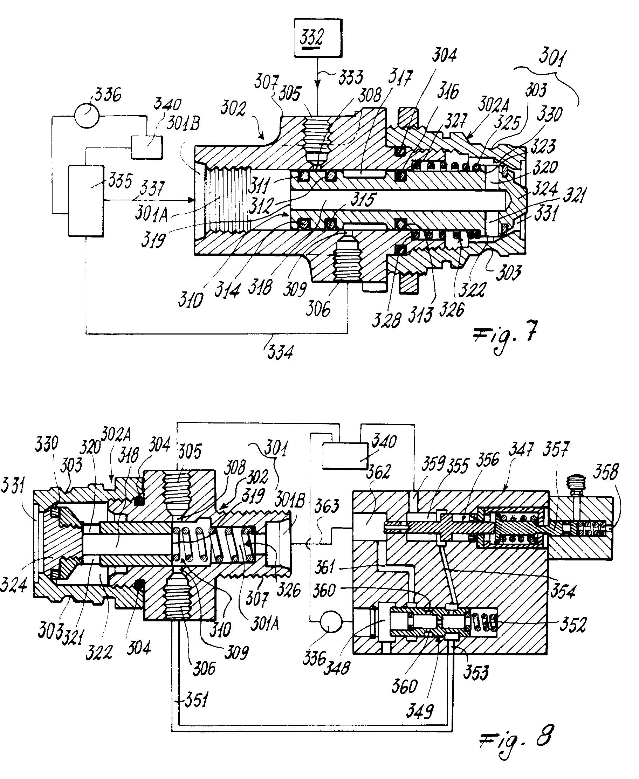

With reference to Figure 7, the body 301 comprises a part 302 onto which there is screwed a ring nut 302A provided externally with seats 303 for connecting the body to the trailer coupling element, which is of known type and is not shown. A seal 304 is inserted between the ring nut 302A and the part 302.

The part 302 is provided with apertures or holes 305 and 306 which open into its surface 307. Feed and discharge ports 308 and 309 extend from these apertures respectively, to terminate in a through bore or chamber 301A in which a piston 310 moves, said bore or chamber having its axis perpendicular to that of said ducts.

In its surface the piston 310 comprises annular recesses 311, 312 and 313 carrying respective seal members 314, 315, 316. An annular recess 317 is provided between the recesses 312 and 313.

The piston 310 also comprises an axial duct 318 which at one end 319 of the piston opens into the chamber 301A in the part 302, whereas from its other end there extend two radial channels 320 and 321 which open into a chamber 322 in the ring nut 302A.

The piston 310 comprises an annular step 323 in proximity to its substantially conical head 324, and against which the end 325 of a spring 326 rests, its other end 327 resting against an annular recess 328 in the part 302 of the body 301.

When the device is not connected to the trailer the head 324 of the piston 310 rests in a sealed manner against the frusto-conical edge 330 of an aperture 331 in the ring nut 302A.

It will be assumed that this device is connected into a conventional tractor braking circuit comprising a vegetable oil-containing part 332 (represented schematically as a single block) connected by a duct 333 to the hole 305. A line 334 extends from the hole 306 to a distributor 335 of known type, such as a currently used distributor. Said distributor is connected to the mineral oil part of the tractor braking circuit (comprising the usual pump 336 and a receiver 340) and is connected to the described device by a line 337 connected to the opening 301B in the chamber 301A.

In the illustrated situation the trailer is riot connected to the tractor. In this case, with the head 324 of the piston 310 resting against the ring nut 302A, the ducts 308 and 309 are not connected together because of interruption by the piston 310.

It will now be assumed that a trailer is connected to the tractor. Usual pusher means, not shown, associated with the trailer act against the piston 310 to move it into the body 301 away from the ring nut 302A, so opening the aperture 331 in this latter.

With the movement of the piston 310, its recess 317 moves into a position such as to connect the ports 308 and 309 together to thus enable the pressurized braking fluid in the duct 333 to pass through the body 301 and reach the line 334, from which it passes to the distributor 335 (so carrying a pressure signal).

When the braking fluid reaches the distributor this latter in known manner enables the braking fluid to be fed by the pump 336 into the device body 301 via the line 337.

This fluid passes into the chamber 301A in the part 302 of said body and penetrates into the duct 318 of the piston 310. From this duct it reaches the channels 320 and 321 to enter the chamber 322 of the ring nut 302A, from which it leaves through the aperture 331 to reach the trailer braking circuit.

Figure 8 shows a further embodiment of the device according to the invention. In this figure parts corresponding to those of Figure 7 are indicated by the same reference numerals.

Said device is connected to a distributor 347 of known type via a line 351 connected to the hole 306, the hole 305 being connected to the receiver 340.

In said embodiment, when the trailer is disconnected the piston 310 maintains the connection between the holes 305 and 306 but interrupts it when the trailer is connected to the tractor.

The distributor shown in Figure 8 is used as follows.

When the trailer is not connected (as shown in Figure 8), the piston 310 is displaced to the left and rests in a sealed manner against the edge 330 of the ring nut 302A.

In this situation, the fluid (mineral oil) fed by the pump 336 to the distributor 347 enters a chamber 348 in which a servovalve of known type 349 is provided, mobile against a spring 352.

From this chamber the pressurized fluid passes into a channel 353 connected to the line 351 and enters the device 301 from which it leaves via the hole 305 connected to the receiver 340.

At the same time, within the distributor 347 the fluid passes through a channel 354, and enters a chamber 355 housing a piston 356 of known construction and operation. This latter piston moves under a pressure exerted by a mobile member 357 subjected to the thrust of the vegetable oil which reaches the distributor 347 via an inlet 358 when the tractor brakes are operated.

The fluid passes from the chamber 355 into a channel 359, to then flow from the distributor and into the receiver 340.

When the trailer is connected to the tractor, the piston 310, urged by a usual pusher means on the trailer, moves to the right to break the connection between the ports 308 and 309 (and the holes 305 and 306). In this case the pressurized fluid is fed by the pump 336 from the chamber 348 into the channel 354 alone, to reach the chamber 355. From here it enters the channel 359 and leaves the distributor to enter the receiver 340.

If the tractor brakes are now operated in known manner, the piston 356 moves within the chamber 355 and intercepts the channel 354.

In this manner, as the channels 354 and 351 are closed, the servovalve 349 moves towards the left, radial channels 360 then enabling the fluid pumped by the pump 336 to pass from the chamber 348 into a channel 361 which connects this chamber to a distributor exit 362. From this exit the fluid passes through a line 363 (shown schematically) and into the chamber 301A of the device. From this latter it leaves in the described manner to reach the trailer.

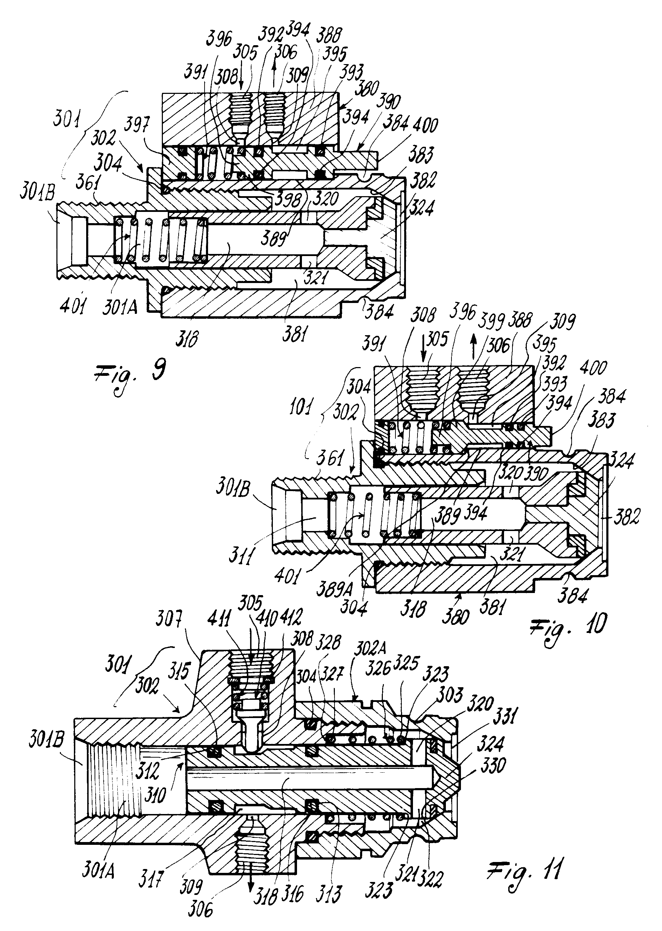

The device of Figures 9, 10 and 11 is connected to a braking circuit as shown in Figure 7. This circuit is not reproduced in said figures. In said figures, parts corresponding to those of Figures 7 and 8 are indicated by the same reference numerals.

With particular reference to Figures 9 and 10, a member 380 is screwed onto the part 302 of the device and comprises a cavity 381 within which that part of the piston 310 close to the head 324 moves. This cavity terminates in an aperture 382, against the inner edges 383 of which said head 324 rests. Seats 384 are provided on the outside of the member 380 in proximity to said aperture, for the same purpose as the seats 303 of Figures 7 and 8.

The holes 305 and 306 and the accompanying ports 308 and 309 are provided in a part 388 of the member 380. These ports open into a chamber 389 which is closed at one end by a plug 397 and contains a piston 390 mobile against a spring 391. The piston 390 comprises annular recesses 392 and 393 in which seal rings 394 are arranged. A sunken portion 395 is provided between said recesses.

In Figure 9 that end 396 of the piston 390 within the chamber 389 and against which the spring 391 acts is separated from the recess 392 by a shoulder 398, whereas the same end of the piston 390 shown in Figure 10 is separated from the recess 392 by a frusto-conical part 399 which when in its end-of-travel position rests against a step 398A of said chamber.

In both figures, the opposite end 400 of said piston projects from said chamber when in its end-of-travel position. On this end the acts a projecting part (not shown) of a trailer connection member (also not shown).

In Figures 9 and 10 the piston 310 is mobile within the chamber 301A in the part 302 of the body 301 against a spring 401.

The device shown in Figures 9 and 10 is used as follows.

When the trailer is not connected to the tractor the ports 308 and 309 do not communicate. Thus no pressure signal reaches the distributor (not shown in said figures).

When the trailer is connected, the projecting part of the connector of this latter urges the piston 390 into the chamber 389 against the spring 391. In this manner the sunken portion 395 connects the ports 308 and 309 together so that pressurized fluid leaves the aperture 306 to reach the distributor. From here, on receipt of the pressure signal, a pressurized fluid enters the chamber 301A in the part 302 of the body 301 (within which the piston 324 moves against the spring 401 following action against it of the usual trailer pusher means) and from here, in the already described manner, leaves through the aperture 382 in the member 380 to reach the trailer braking circuit.

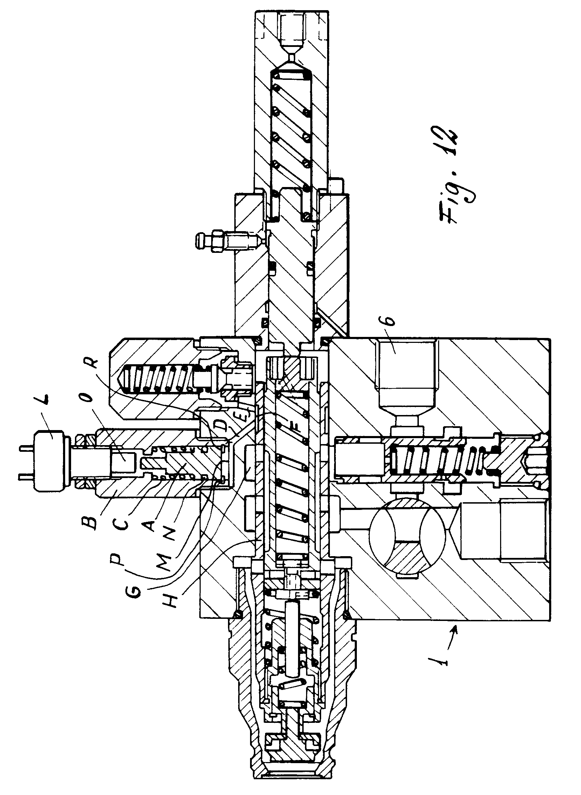

Figure 11 represents a further embodiment of the device of Figure 7. This embodiment differs from that of said figure in that the port 308 carries a valve element 410 mobile against a spring 411 present in the hole 305 and acting against a fixed ring 412.

This mobile member projects from the port 308 into the chamber 301A and cooperates with the sunken portion 317 of the piston 310.

This sunken portion comprises a part 317A of lesser depth.

When the device is in operation, following the movement of the piston 310 in the chamber 301A (in the manner already described), the valve element 410 slides along the walls of the part 317A to rise within said port. The fluid can therefore pass from the hole 305 into the sunken portion 317 and then through the port 309. From here it leaves through the hole 306 to reach the distributor (not shown), which then feeds pressurized fluid to the body 301, from which it flows (in the already described manner) to the trailer.

The modification of Figure 12, which is related to the embodiment of Figures 1 to 3, consists in the addition of a unit for controlling an indicator lamp associated with the trailer braking circuit. This unit comprises a piston A mounted slidingly against a spring C under sealed conditions (at N) in a member B screwed into a side hole in the main body of the device. Into the end of the member B there is screwed an electrical switch L of conventional type controlled by the piston A which acts on the switch knob O.

When the trailer is connected to the device, the casing H (corresponding to the casing 20 of Figures 1 to 3) moves towards the right (to assume the position shown in Figure 12), so connecting the chamber M, lying below the piston A, directly to the receiver, which is connected to the port 6 via the channel D, the circular groove F provided on the casing H, the the channel E (corresponding to the channel 99) and the channel 100 (see Figure 1). During this stage there is therefore no pressure in the chamber M as this is connected to discharge. The spring C therefore moves the piston A downwards against a stop consisting of a snap ring R to release the knob O of the electric switch L, to allow the switch to activate said indicator lamp.

If however the trailer is not connected, the casing H moves towards the left (relative to the position shown in Figure 12) to connect the chamber M to the groove G (indicated by 24A in Figures 1 to 3) via the channel D and the circular groove F. The groove G contains oil fed by the pump and having a pressure sufficient to raise the piston A against the spring and thus move the knob O of the electric switch L upwards to thus deactivate the electrical circuit incorporating said indicator lamp. This is very useful because when the trailer is not connected, those warning lamps on the tractor which indicate possible malfunction of the trailer hydraulic circuit must not light.

## Claims

1. A device for effecting hydraulic connection and control between a trailer braking system and a liquid braking circuit (335, 336, 340; 347, 336, 340) pertaining to a tractor and provided with a circulation pump (336), a recycling vessel (340) for said liquid, and a distributor (42, 20, 101; 335; 347) provided for transmitting braking signals from the tractor braking system (332) to that of the trailer, the device comprising a body (1, 2, 4; 302; 302A) in which there is slidingly mounted a valving member movable against a spring (67, 60; 326; 401) and closing, when the trailer is separated from the tractor, an aperture (73A; 331) by which this circuit (335, 336, 340; 347, 336, 340) is hydraulically connected to the trailer braking system, this aperture being opened by movement of the valving member when the trailer is coupled, characterized by comprising a control means (20; 310; 390) positioned in the liquid braking circuit between the pump (336) and the vessel (340) via the distributor (42, 20, 104; 335, 347), or in the functional connection between the tractor braking system (332) and the liquid braking circuit (335, 336, 340; 347, 336, 340), said control means being movable against a spring jointly with the valving member (69; 324) from a first position, corresponding to the trailer uncoupled, to a second position, corresponding to the trailer coupled, when in the first position the braking signal originating from the tractor braking circuit (332) having no influence on the pump load, whereas when in the second position such a braking signal results in an increase in the pump loading and a corresponding increase in the pressure acting on the trailer braking system.

2. A device as claimed in claim 1, characterized in that the distributor (42, 20, 104 - Figures 1, 3, 4, 5, 6, 12) is incorporated into said body (1, 2, 4).

3. A device as claimed in claim 1, characterized in that the valving member (324) and the control means (310) are mutually rigid and form a single member, so that their directions of movement coincide (Figures 7, 8, 11).

4. A device as claimed in claim 1, characterized in that the valving member and the control means are separated (Figures 9 and 10) and arranged parallel to each other, they being positioned such that both are moved against springs on coupling the trailer.

5. A device as claimed in claim 3, characterized in that it comprises a slidable piston (310) bearing the valving member (324) and provided with a sunken portion (317) with a part (31) of lesser depth, said sunken portion cooperating with a valve means (410) which controls passage means (305, 306, 317) to the distributor.

6. A device as claimed in claim 1, characterised in that the body (1, 2) is provided with ducts (5, 18) arranged to connect the tractor hydraulic circuit, in which the usual pump and a receiver are present, to a chamber (19) containing control means in the form of a hollow member or casing (20) mobile within said chamber (19) by the action of a presser means (77) associated with a coupling (3) for the trailer, the casing (20) comprising in its outer wall (21) apertures (22, 22A, 23, 23A, 24, 24A) communicating with its inner cavity which contains a mobile member or piston (42) subjected to the action of presser means (101, 102) driven by the fluid of the tractor braking circuit, said piston (42) comprising on its exterior an annular recess (43), the relative movement between the piston (42) and casing (20) causing the tractor braking circuit to be connected to the braking circuit of the trailer when this latter is connected to said tractor, whereas when the trailer is not connected to said tractor communication is maintained between one of the ducts (5) and a discharge duct (6) provided in said body (1) and connected to said receiver or to other usual users associated with the tractor.

7. A device as claimed in claim 1 or claims 1 and 6, characterised by comprising a member or cock (8) located mobile in a seat (7() in the body (1, 2) and arranged to be rotated within said seat (7) by a usual tractor handbrake, said member (8) comprising ducts (11, 12, 13) which communicate respectively with the ducts (5, 18) carrying the fluid into the chamber (19) in which the mobile casing (20) is contained, and with channels (14, 15, 16, 17) provided in said body (1), said member (8) being arranged to intercept the fluid reaching the body (1) from the entry duct (5) and to deviate it to the discharge duct, or to unload and balance the pressure in the trailer braking circuit or in the device itself.

8. A device as claimed in claim 7, characterised in that the rotary member (8) comprises an arm (9) subjected to the action of the handbrake, and a body (10) comprising the ducts (11, 12, 13) which cooperate with the channels (14, 15, 16, 17) in the body (1) of the device.

9. A device as claimed in claim 7, characterised in that the channels in the body (1) comprise ducts (14, 15) which originate from a cavity (27) in which a servovalve (28) is located and are directed to a section (19A) of the chamber (19) containing the mobile casing (20), said ducts cooperating with one of the ducts (12) provided in the body (10) of the rotary member (8) to stabilize the fluid pressure within the device and within the trailer braking circuit, said channels also comprising ducts (16, 17) cooperating with one of the ducts (13) of said rotary member to discharge the pressurized fluid in the trailer braking circuit before the trailer is disconnected from the tractor.

10. A device as claimed in claim 1 or claims 1 and 6, characterised in that the presser means (101, 210) for the piston (42) mobile within the casing (20) are a piston mobile within a block (4) fixed to the device body (1), said piston moving in channels (103, 105) separated form each other by an intermediate chamber (108), said channels being provided with seal members (106, 107), from said chamber (108) there extending a channel (109) for purging that part of the tractor braking circuit associated with said block (4).

11. A device as claimed in claim 10, characterised in that the presser means (101) for the piston (42) mobile within the casing (20) are a double-bodied piston.

12. A device as claimed in claim 10, characterised in that the presser means are a piston (210) subjected to the action of a compression spring (212) located in a cavity (214) in the block (4) associated with the device.

13. A device as claimed in claim 10, characterised in that the presser means (101, 210) act on an element (46) mobile within one end (44) of a cavity (54) in the piston (42) against a spring (56) inserted into said cavity and also cooperating with the opposite end (49) of said piston, in which a duct (53) is provided communicating with channels (51, 52) in an element (50), said element (50) being associated with said opposite end (49), which opens onto the wall (21) of the casing (20) within which said piston moves.

14. A device as claimed in claim 13, characterised in that the element (50) cooperates with a free element (65) mobile within a channel (64) in a member (61) fixed to one end (62) of the casing (20) and subjected to the pressure of the return fluid from the trailer braking circuit, said fluid acting on said mobile element in a cavity (66) of said member (61) when the pressure of said fluid attains a high value, the fluid reaching said cavity via a duct (68A) provided in a support (68) mobile relative to said member (61) and carrying a headpiece (69) on which the presser means (77) associated with the coupling (3) for the trailer acts.

15. A device as claimed in claim 1 or claims 1 and 6, characterised in that some of the apertures (22, 22A) provided in the wall (21) of the casing (20) are arranged to cooperate with a chamber (2H) of a connection member (2) for the coupling (3), said apertures being arranged to cooperate with ducts (55) provided in one end (49) of the piston (42) mobile within the casing (20) provided in the device.

16. A device as claimed in claims 1 and 9 or claims 1, 6 and 9, characterised in that some of the apertures (23, 23A, 24, 24A) in the mobile casing (20) cooperate with recesses (25, 26) in the device body (1), one of these recesses communicating with the entry duct and the other with the cavity (27) in which the servovalve (28) is provided.

17. A device as claimed in claim 1 or claims 1 and 6, characterised in that the piston (42) moves within the casing (20) against a spring (60).

18. A device as claimed in claim 1 or claims 1 and 6, characterised in that a valve 91 is associated with the body (1) to keep the fluid to be fed to the trailer pressurized and to discharge said fluid when its pressure is high.

19. A device as claimed in claim 18, characterised in that the valve (91) comprises, for a duct (96) communicating with the chamber (19) containing the mobile casing (20), an intercepting element (93) subjected to the action of a compression spring (94), said spring (94) being located in a chamber (95) connected to a duct (100) through which the fluid discharges to the receiver and to a channel (99) originating from the chamber (19) containing said casing (20).

20. A device as claimed in claim 1 or claims 1, 6, 15 and 19, characterised by comprising a further valve (200) to discharge fluid when the pressure in the trailer braking circuit is high, said valve (200) intercepting ducts (202, 203) communicating with the chamber (2H) of the connector (2) for the coupling (3) and with the discharge duct (100) respectively.

21. A device as claimed in claim 1 or claims 1 and 6, characterised by comprising a bleed valve (110) associated with the block (4) fixed to the device body (1).

22. A device as claimed in claim 1, characterised by comprising a body (301), and a valving member (310, 390) mobile against a spring (326, 401) and provided with passages, and arranged to assume two states depending on whether the trailer is coupled or not, in a first state, corresponding to the trailer coupled, one of said passages being freed to allow braking of the trailer, whereas in the second state, ie with the trailer separated, the pump being unable to provide the pressure required for braking the trailer.

23. A device as claimed in claim 22, characterised in that the body (301) is provided with entry and exit passages (308, 309) opening into a chamber (301A) containing a mobile member (310) subjected to the action of usual presser means associated with the trailer.

24. A device as claimed in claim 23, characterised in that the entry and exit passages (300, 309) are connected respectively to a first part of the tractor braking circuit (332) and to a distributor member (335) located in a second part of said circuit, in which the usual pump (336) is present.

25. A device as claimed in claim 23, characterised in that the entry and exit passages (308, 309) are connected respectively to the receiver (340) of a second part of the tractor braking circuit and to the pump (336) via a distributor (347).

26. A device as claimed in claim 23, characterised in that the entry and exit passages (308, 309) open into a chamber (389) in an element (380) associated with a part (302) of the coupling, within said chamber there moving against a spring (391) a piston (390) subjected to the action of a usual pusher means on the trailer, said piston connecting together said passages (308, 309) when said trailer is connected to the tractor.

27. A device as claimed in claim 26, characterised in that the entry and exit passages (308, 309) are connected respectively to a vegetable oil part of the tractor refrigeration circuit and to a distributor, this latter feeding pressurized brake fluid into a chamber (301A) containing the mobile valving member (310), said fluid, via passages (318, 320, 321) therein, being able to reach an exit (382) of said device.

28. A device as claimed in claims 24 and 26, characterised in that the mobile member (310) and the piston (390) of the element (380) of the device comprise an external annular sunken portion (317).

29. A device as claimed in claim 22, characterised in that the mobile member (310) comprises an external recess (317) with a part (317A) of different depth to cooperate with a valve element (410) associated with the entry duct (308) within the body (301).

30. A device as claimed in claim 26, characterised in that the body (301) comprises a part (302) which is provided with the chamber (301A) into which the entry and exit ducts (308, 309) open, said chamber (301A) being connected to a further chamber (322) provided in a ring nut (302A) associated with said part (302).

31. A device as claimed in claims 22 and 29, characterised in that the mobile member (310) moves within the chambers (301A, 322) in the part (302) and in the ring nut (302A) of the body (301), said member being provided with an internal duct (318) from which channels (320, 321) located in proximity to its head (324) extend, said head (324), when the trailer is disconnected, cooperating with the inner edges (330) of an aperture (331) in the ring nut (302A), said channels and duct (318, 320, 321) enabling brake fluid to be transferred from the tractor to the trailer.

32. A device as claimed in one or more of claims 22 to 30, characterised by being associated with or incorporated into a distributor.

33. A device as claimed in one or more of claims 1 to 27, characterised in that the movement of the casing (H) determines the activation or non-activation of a warning lamp indicating whether the trailer is connected or not connected to the tractor.

## Patentansprüche

1. Vorrichtung zum Bewirken einer hydraulischen Verbindung und einer Steuerung zwischen einem Anhänger-Bremssystem und einem Flüssigkeits-Bremskreis (335, 336, 340; 347, 336, 340), der zu einer Zugmaschine gehört und eine Umwälzpumpe (336), einen Sammelbehälter (340) für die Flüssigkeit und einen Verteiler (42, 20, 101; 335; 347) aufweist, der zum Übertragen von Bremssignalen vom Zugmaschinen-Bremssystem (332) zu dem des Anhängers vorgesehen ist, wobei die Vorrichtung einen Grundkörper (1, 2, 4; 302; 302A), in dem ein Ventil-Bauteil gleitend gehalten ist, das gegen eine Feder (67, 60; 326; 401) beweglich ist und geschlossen ist, wenn der Anhänger von der Zugmaschine getrennt ist, und eine Öffnung (73A; 331) aufweist, durch die dieser Kreis (335, 336, 340; 347, 336, 340) mit dem Anhänger-Bremssystem hydraulisch verbunden wird, wobei diese Öffnung durch Bewegen des Ventil-Bauteils geöffnet wird, wenn der Anhänger angekoppelt wird, **dadurch gekennzeichnet,** daß die Vorrichtung eine Steuereinrichtung (20; 310; 390) enthält, die im Flüssigkeits-Bremskreis über den Verteiler (42, 20, 104; 335, 347) zwischen der Pumpe (336) und dem Behälter (340) angeordnet ist oder in funktionaler Verbindung zwischen dem Zugmaschinen-Bremssystem (332) und dem Flüssigkeits-Bremskreis (335, 336, 340; 347, 336, 340) angeordnet ist, wobei die Steuereinrichtung zusammen mit dem Ventil-Bauteil (69; 324) gegen eine Feder von einer ersten Stellung, die dem abgekoppelten Anhänger entspricht, in eine zweite Stellung bewegbar ist, die dem angekoppelten Anhänger entspricht, wobei in der ersten Stellung das Bremssignal, welches vom Zugmaschinen-Bremskreis (332) ausgeht, keinen Einfluß auf die Pumpenlast hat, wohingegen ein solches Bremssignal in der zweiten Stellung zu einem Anstieg der Pumpenlast und zu einem entsprechenden Anstieg des auf das Anhänger-Bremssystem wirkenden Drucks führt.

2. Vorrichtung nach Anspruch 1, **dadurch gekennzeichnet,** daß der Verteiler (42, 20, 104 - Figuren 1, 3, 4, 5, 6, 12) im Grundkörper (1, 2, 4) angeordnet ist.

3. Vorrichtung nach Anspruch 1, **dadurch gekennzeichnet,** daß das Ventil-Bauteil (324) und die Steuereinrichtung (310) gegenseitig starr zueinander sind und ein einzelnes Bauteil bilden, so daß ihre Bewegungsrichtungen übereinstimmen (Figuren 7, 8, 11).

4. Vorrichtung nach Anspruch 1, **dadurch gekennzeichnet,** daß das Ventil-Bauteil und die Steuereinrichtung getrennt (Figuren 9 und 10) und parallel zueinander angeordnet sind, wobei sie so angeordnet sind, daß beide beim Ankoppeln des Anhängers gegen Federn bewegt werden.

5. Vorrichtung nach Anspruch 3, **dadurch gekennzeichnet,** daß diese einen verschiebbaren Kolben (310) aufweist, der das Ventil-Bauteil (324) trägt und mit einem vertieften Bereich (317) mit einem Abschnitt (31) geringerer Tiefe versehen ist, wobei der vertiefte Bereich mit einer Ventileinrichtung (410) zusammenwirkt, die die Durchlaßeinrichtungen (305, 306, 317) zum Verteiler steuert.

6. Vorrichtung nach Anspruch 1, **dadurch gekennzeichnet,** daß der Grundkörper (1, 2) mit Leitungen (5, 18) versehen ist, die dazu ausgelegt sind, um den Zugmaschinen-Hydraulikkreis, in dem sich die übliche Pumpe und ein Sammelbehälter befinden, mit einer Kammer (19) zu verbinden, die die Steuereinrichtung in der Form eines hohlen Bauteils oder Gehäuses (20) enthält, das in der Kammer (19) durch die Wirkung einer Druckeinrichtung (77) bewegbar ist, die mit einer Kupplung (3) für den Anhänger in Beziehung steht, wobei das Gehäuse (20) in seiner äußeren Wand (21) Öffnungen (22, 22A, 23, 23A, 24, 24A) aufweist, die mit seinem inneren Hohlraum in Verbindung stehen, der ein bewegbares Bauteil oder Kolben (42) enthält, der der Wirkung der Druckeinrichtung (101, 102) ausgesetzt ist, die durch die Flüssigkeit des Zugmaschinen-Bremskreises betrieben wird, wobei der Kolben (42) an seinem Äußeren eine ringförmige Vertiefung (43) aufweist, wobei die relative Bewegung zwischen dem Kolben (42) und dem Gehäuse (20) bewirkt, daß der Zugmaschinen-Bremskreis mit dem Bremskreis des Anhängers verbunden wird, wenn dieser letztere mit der Zugmaschine verbunden wird, wohingegen wenn der Anhänger nicht mit der Zugmaschine verbunden ist, eine Verbindung zwischen einer der Leitungen (5) und einem Ablaufrohr (6) aufrechterhalten wird, das im Grundkörper (1) angeordnet und mit dem Sammelbehälter oder mit anderen herkömmlichen Benutzern verbunden ist, die zu der Zugmaschine gehören.

7. Vorrichtung nach Anspruch 1 oder nach den Ansprüchen 1 und 6, **dadurch gekennzeichnet,** daß diese ein Bauteil oder einen Sperrhahn (8) aufweist, der beweglich in einem Sitz (7) im Grundkörper (1, 2) angeordnet und angepaßt ist, um durch eine gewöhnliche Zugmaschinen-Handbremse im Sitz (7) gedreht zu werden, wobei das Bauteil (8) Leitungen (11, 12, 13) aufweist, die jeweils mit den Leitungen (5, 18), welche die Flüssigkeit in die Kammer (19) führen, in der sich das bewegliche Gehäuse (20) befindet, und mit Kanälen (14, 15, 16, 17) in Verbindung stehen, die im Grundkörper (1) vorgesehen sind, wobei das Bauteil (8) dazu ausgelegt ist, um die den Grundkörper (1) über die Eintrittsleitung (5) erreichende Flüssigkeit zu unterbrechen und sie in das Ablaufrohr abzuleiten oder den Druck im Anhänger-Bremskreis oder in der Vorrichtung selbst zu verringern und auszugleichen.

8. Vorrichtung nach Anspruch 7, **dadurch gekennzeichnet,** daß das Drehbauteil (8) einen Arm (9), der der Wirkung der Handbremse ausgesetzt ist, und einen Grundkörper (10) aufweist, der die Leitungen (11, 12, 13) enthält, die mit den Kanälen (14, 15, 16, 17) im Grundkörper (1) der Vorrichtung zusammenwirken.

9. Vorrichtung nach Anspruch 7, **dadurch gekennzeichnet,** daß die Kanäle im Grundkörper (1) Leitungen (14, 15) aufweisen, die von einem Hohlraum (27) ausgehen, in dem sich ein Servo-Ventil (28) befindet, und die in einen Abschnitt (19A) der Kammer (19), welche das bewegliche Gehäuse (20) enthält, geführt werden, wobei die Leitungen mit einer der im Grundkörper (10) des Drehbauteils (8) befindlichen Leitungen (12) zusammenwirken, um den Flüssigkeitsdruck in der Vorrichtung und im Anhänger-Bremskreis zu stabilisieren, wobei die Kanäle ebenfalls Leitungen (16, 17) aufweisen, die mit einer der Leitungen (13) des Drehbauteils zusammenwirken, um die unter Überdruck stehende Flüssigkeit im Anhänger-Bremskreis abzuführen, bevor der Anhänger von der Zugmaschine getrennt wird.

10. Vorrichtung nach Anspruch 1 oder nach den Ansprüchen 1 und 6, **dadurch gekennzeichnet,** daß die Druckeinrichtung (101, 210) für den im Gehäuse (20) beweglichen Kolben (42) ein Kolben ist, der in einem Block (4) beweglich ist, welcher am Vorrichtungs-Grundkörper (1) befestigt ist, wobei sich der Kolben in Kanälen (103, 105) bewegt, die durch eine zwischenliegende Kammer (108) voneinander getrennt sind, wobei die Kanäle mit Dichtungs-Bauteilen (106, 107) versehen sind, und wobei sich von der Kammer (108) ein Kanal (109) erstreckt, um jenen Teil des Zugmaschinen-Bremskreises zu entleeren, der mit dem Block (4) in Beziehung steht.

11. Vorrichtung nach Anspruch 10, **dadurch gekennzeichnet,** daß die Druckeinrichtung (101) für den im Gehäuse (20) beweglichen Kolben (42) ein doppelt ausgebilderter Kolben ist.

12. Vorrichtung nach Anspruch 10, **dadurch gekennzeichnet,** daß die Druckeinrichtung ein Kolben (210) ist, der der Wirkung einer Druckfeder (212) ausgesetzt ist, die in einem Hohlraum (214) im Block (4) angeordnet ist, der zur Vorrichtung gehört.

13. Vorrichtung nach Anspruch 10, **dadurch gekennzeichnet,** daß die Druckeinrichtung (101, 210) auf ein Element (46) wirkt, das in einem Ende (44) eines Hohlraums (54) im Kolben (42) gegen eine Feder (56) beweglich ist, die im Hohlraum angeordnet ist und ebenfalls mit dem gegenüberliegenden Ende (49) des Kolbens zusammenwirkt, in dem eine Leitung (53) vorgesehen ist, die mit den Kanälen (51, 52) in einem Element (50) in Verbindung steht, wobei das Element (50) mit dem gegenüberliegenden Ende (49) in Beziehung steht, das sich zur Wand (21) des Gehäuses (20) öffnet, in dem sich der Kolben bewegt.

14. Vorrichtung nach Anspruch 13, **dadurch gekennzeichnet,** daß das Element (50) mit einem freien Element (65) zusammenwirkt, das in einem Kanal (64) in einem Bauteil (61) beweglich ist, welches an einem Ende (62) des Gehäuses (20) befestigt und dem Druck der vom Anhänger-Bremskreis zurückkehrenden Flüssigkeit ausgesetzt ist, wobei die Flüssigkeit auf das bewegliche Element in einem Hohlraum (66) des Bauteils (61) wirkt, wenn der Druck der Flüssigkeit einen hohen Wert erreicht, wobei die Flüssigkeit den Hohlraum über eine Leitung (68A) erreicht, die in einer Halterung (68) vorgesehen ist, welche zum Bauteil (61) relativ bewegbar ist und ein Kopfstück (69) trägt, auf das die Druckeinrichtung (77) wirkt, die zur Kupplung (3) für den Anhänger gehört.

15. Vorrichtung nach Anspruch 1 oder nach den Ansprüchen 1 und 6, **dadurch gekennzeichnet,** daß einige der Öffnungen (22, 22A), die in der Wand (21) des Gehäuses (20) vorgesehen sind, dazu ausgelegt sind, um mit einer Kammer (2H) eines Verbindungs-Bauteils (2) für die Kupplung (3) zusammenzuwirken, wobei die Öffnungen dazu ausgelegt sind, um mit Leitungen (55) zusammenzuwirken, die in einem Ende (49) des Kolbens (42) vorgesehen sind, der in dem in der Vorrichtung vorgesehenen Gehäuse (20) beweglich ist.

16. Vorrichtung nach Anspruch 1 und 9 oder nach den Ansprüchen 1, 6 und 9, **dadurch gekennzeichnet,** daß einige Öffnungen (23, 23A, 24, 24A) im beweglichen Gehäuse (20) mit Vertiefungen (25, 26) im Vorrichtungs-Grundkörper (1) zusammenwirken, wobei eine dieser Vertiefungen mit der Eintrittsleitung und die anderen mit dem Hohlraum (27) zusammenwirken, in dem das Servoventil (28) angeordnet ist.

17. Vorrichtung nach Anspruch 1 oder nach den Ansprüchen 1 und 6, **dadurch gekennzeichnet,** daß sich der Kolben (42) im Gehäuse (20) gegen eine Feder (60) bewegt.

18. Vorrichtung nach Anspruch 1 oder nach den Ansprüchen 1 und 6, **dadurch gekennzeichnet,** daß ein Ventil (91) mit dem Grundkörper (1) in Beziehung steht, um die Flüssigkeit, die zum Anhänger geführt wird, unter Druck zu halten und um die Flüssigkeit abzuführen, wenn deren Druck zu hoch ist.

19. Vorrichtung nach Anspruch 18, **dadurch gekennzeichnet,** daß das Ventil (91) für eine Leitung (96), die mit der Kammer (19) in Verbindung steht, welche sich im beweglichen Gehäuse (20) befindet, ein Unterbrechungselement (93) aufweist, das unter der Wirkung einer Druckfeder (94) steht, wobei die Feder (94) in einer Kammer (95) angeordnet ist, die mit einer Leitung (100) verbunden ist, durch die die Flüssigkeit zum Sammelbehälter und zu einem Kanal (99) abgeführt wird, der von der im Gehäuse (20) angeordneten Kammer (19) ausgeht.

20. Vorrichtung nach Anspruch 1 oder nach den Ansprüchen 1, 6, 15 und 19, **dadurch gekennzeichnet,** daß diese ein weiteres Ventil (200) enthält, um Flüssigkeit abzuführen, wenn der Druck im Anhänger-Bremskreis hoch ist, wobei das Ventil (200) die Leitungen (202, 203) unterbricht, die mit der Kammer (2H) der Verbindung (2) für die Kupplung (3) bzw. mit dem Ablaufrohr (100) in Verbindung stehen.

21. Vorrichtung nach Anspruch 1 oder nach den Ansprüchen 1 und 6, **dadurch gekennzeichnet,** daß diese ein Entlüftungsventil (110) enthält, das mit dem Block (4) in Beziehung steht, der am Vorrichtungs-Grundkörper (1) befestigt ist.

22. Vorrichtung nach Anspruch 1, **dadurch gekennzeichnet,** daß diese einen Grundkörper (301) und ein Ventil-Bauteil (310, 390) enthält, das gegen eine Feder (326, 401) beweglich, mit Durchgängen versehen und dazu ausgelegt ist, um zwei Zustände anzunehmen, abhängig davon, ob der Anhänger angekoppelt ist oder nicht, wobei in einem ersten Zustand, der dem angekoppelten Anhänger entspricht, einer der Durchgänge das Abbremsen des Anhängers zuläßt, wohingegen im zweiten Zustand, d.h. bei abgekoppeltem Anhänger, die Pumpe nicht in der Lage ist, den Druck aufzubauen, der zum Abbremsen des Anhängers erforderlich ist.

23. Vorrichtung nach Anspruch 22, **dadurch gekennzeichnet,** daß der Grundkörper (301) mit Einlaß- und Auslaßdurchgängen (308, 309) versehen ist, die sich in eine Kammer (301A) öffnen, die ein bewegliches Bauteil (310) enthält, das der Wirkung einer herkömmlichen Druckeinrichtung ausgesetzt ist, die mit dem Anhänger in Beziehung steht.

24. Vorrichtung nach Anspruch 23, **dadurch gekennzeichnet,** daß die Einlaß- und Auslaßdurchgänge (308, 309) jeweils mit einem ersten Teil des Zugmaschinen-Bremskreises (332) und mit einem Verteiler-Bauteil (335) verbunden sind, das in einem zweiten Teil des Kreises angeordnet ist, in dem sich die herkömmliche Pumpe (336) befindet.

25. Vorrichtung nach Anspruch 23, **dadurch gekennzeichnet,** daß die Einlaß- und Anslaßdurchgänge (308, 309) jeweils über einen Verteiler (347) mit dem Sammelbehälter (340) eines zweiten Teils des Zugmaschinen-Bremskreises und mit der Pumpe (336) verbunden sind.

26. Vorrichtung nach Anspruch 23, **dadurch gekennzeichnet,** daß sich die Einlaß- und Auslaßdurchgänge (308, 309) in eine Kammer (389) in einem Element (380) öffnen, das mit einem Teil (302) der Kupplung in Beziehung steht, wobei sich in der Kammer ein Kolben (390), der der Wirkung einer herkömmlichen Druckeinrichtung des Anhängers ausgesetzt ist, gegen eine Feder (391) bewegt, wobei der Kolben die Durchgänge (308, 309) miteinander verbindet, wenn der Anhänger mit der Zugmaschine verbunden ist.

27. Vorrichtung nach Anspruch 26, **dadurch gekennzeichnet,** daß die Einlaß- und Auslaßdurchgänge (308, 309) jeweils mit einem Pflanzenölabschnitt des Zugmaschinen-Kühlkreises und mit einem Verteiler verbunden sind, wobei dieser letztere unter Druck stehende Bremsflüssigkeit in eine Kammer (301A) führt, in der das bewegliche Ventil-Bauteil (310) angeordnet ist, wobei die Flüssigkeit über darin enthaltene Durchgänge (318, 320, 321) in der Lage ist, einen Auslaß (382) der Vorrichtung zu erreichen.

28. Vorrichtung nach den Ansprüchen 24 und 26, **dadurch gekennzeichnet,** daß das bewegliche Bauteil (310) und der Kolben (390) des Elementes (380) der Vorrichtung einen äußeren, ringförmigen, vertieften Bereich (317) enthalten.

29. Vorrichtung nach Anspruch 22, **dadurch gekennzeichnet,** daß das bewegliche Bauteil (310) eine äußere Vertiefung (317) mit einem Teil (317A) unterschiedlicher Tiefe enthält, um mit einem Ventilelement (410) zusammenzuwirken, das mit der Einlaßleitung (308) im Grundkörper (301) in Beziehung steht.

30. Vorrichtung nach Anspruch 26, **dadurch gekennzeichnet,** daß der Grundkörper (301) einen Abschnitt (302) aufweist, in der die Kammer (301A) angeordnet ist, in die sich die Einlaß- und Auslaßrohrleitungen (308, 309) öffnen, wobei die Kammer (301A) mit einer weiteren Kammer (322) verbunden ist, die in einer Ring-Mutter (302A) angeordnet ist, die mit dem Abschnitt (302) in Beziehung steht.

31. Vorrichtung nach den Ansprüchen 22 und 29, **dadurch gekennzeichnet,** daß sich das bewegliche Bauteil (310) in den Kammern (301A, 322) im Abschnitt (302) und in der Ring-Mutter (302A) des Grundkörpers (301) bewegt, wobei das Bauteil mit einer inneren Leitung (318) versehen ist, von der aus sich Kanäle (320, 321) erstrecken, die in der Nähe dessen Kopfes (324) angeordnet sind, wobei der Kopf (324) mit den inneren Kanten (330) einer Öffnung (331) in der Ring-Mutter (302A) zusammenwirkt, wenn der Anhänger abgekoppelt ist, und wobei es die Kanäle und die Leitung (318, 320, 321) ermöglichen, daß Bremsflüssigkeit von der Zugmaschine zum Anhänger übertragen wird.

32. Vorrichtung nach einem oder mehreren der Ansprüche 22 bis 30, **dadurch gekennzeichnet,** daß diese verbunden ist mit oder angeordnet ist in einem Verteiler.

33. Vorrichtung nach einem oder mehreren der Ansprüche 1 bis 21, **dadurch gekennzeichnet,** daß die Bewegung des Gehäuses (H) die Aktivierung oder Entaktivierung einer Warnlampe bestimmt, die anzeigt, ob der Anhänger mit der Zugmaschine verbunden ist oder nicht.

## Revendications

1. Dispositif pour établir une connexion hydraulique et une commande entre un système de freinage de remorque et un circuit de liquide de freinage (335, 336, 340 ; 347, 336, 340) d'un tracteur, doté d'une pompe de circulation (336), d'une chambre de recyclage (340) pour ledit liquide, et d'un distributeur (42, 20, 101 ; 335, 347) prévu pour transmettre les signaux de freinage émis par le système de freinage (332) du tracteur à celui de la remorque, le dispositif comprenant un corps (1, 2, 4 ; 302 ; 302A) dans lequel est monté à libre coulissement un élément de soupape mobile à l'encontre d'un ressort (67, 60 ; 326 ; 401) et obturant, lorsque la remorque est séparée du tracteur, un orifice (73A ; 331) par lequel ce circuit (335, 336, 340 ; 347, 336, 340) est relié hydrauliquement au système de freinage de la remorque, ledit orifice étant ouvert par le mouvement de l'élément de soupape lorsque la remorque est accouplée, caractérisé en ce qu'il comprend un dispositif de commande (20 ; 310 ; 390) positionné dans le circuit de liquide de freinage entre la pompe (336) et la chambre (340) via le distributeur (42, 20, 104 ; 335, 347) ou dans la connexion fonctionnelle entre le système de freinage du tracteur (332) et le circuit du liquide de freinage (335, 336, 340 ; 347, 336, 340), ledit dispositif de commande étant mobile à l'encontre d'un ressort solidaire de l'élément de soupape (69 ; 324) depuis une première position correspondant à la remorque non accouplée vers une seconde position correspondant à la remorque accouplée, le signal de freinage émis par le circuit de freinage du tracteur (332) n'ayant aucune influence sur la charge de la pompe lorsque le dispositif de commande est dans la première position, tandis que ledit signal de freinage provoque l'augmentation de la charge de la pompe ainsi qu'une augmentation correspondante de la pression s'exerçant sur le système de freinage de la remorque lorsque le dispositif de commande est dans la seconde position.

2. Dispositif selon la revendication 1, caractérisé en ce que le distributeur (42, 20, 104 - Figures 1, 3, 4, 5, 6, 12) est intégré audit corps (1, 2, 4).

3. Dispositif selon la revendication 1, caractérisé en ce que l'élément de soupape (324) et le dispositif de commande (310) sont solidaires l'un de l'autre et forment un élément unique, de telle sorte que leurs sens de déplacement coïncident (Figures 7, 8, 11).

4. Dispositif selon la revendication 1, caractérisé en ce que l'élément de soupape et le dispositif de commande sont séparés (Fig. 9 et 10) et agencés parallèlement l'un à l'autre, de telle sorte qu'ils sont tous les deux déplacés à l'encontre de ressorts lors de l'accouplement de la remorque.

5. Dispositif selon la revendication 3, caractérisé en ce qu'il comprend un piston coulissant (310) portant l'élément de soupape (324) et doté d'une portion en retrait (317) avec une partie (317A) de plus faible profondeur, ladite portion en retrait coopérant avec un dispositif de soupape (410) qui commande le dispositif de communication (305, 306, 317) avec le distributeur.

6. Dispositif selon la revendication 1, caractérisé en ce que le corps (1, 2) comporte des conduits (5, 18) agencés de façon à relier le circuit hydraulique du tracteur, qui comprend la pompe usuelle ainsi qu'un récepteur, à une chambre (19) renfermant le dispositif de commande qui se présente sous la forme d'un élément creux ou carter (20) mobile à l'intérieur de ladite chambre (19) sous l'action d'un dispositif de pression (77) associé à un raccord (3) pour la remorque, le carter (20) comprenant dans sa paroi externe (21) des orifices (22, 22A, 23, 23A, 24, 24A) communiquant avec sa cavité interne qui contient un élément ou piston mobile (42) soumis à l'action d'un dispositif de pression (101, 102) entraîné par le fluide du circuit de freinage du tracteur, ledit piston (42) présentant sur sa face externe une gorge (43), le mouvement relatif entre le piston (42) et le carter (20) provoquant la connexion du circuit de freinage du tracteur avec le circuit de freinage de la remorque lorsque cette dernière est reliée audit tracteur, tandis que, lorsque la remorque n'est pas reliée audit tracteur, la communication est maintenue entre l'un des conduits (5) et un conduit de décharge (6) prévu dans ledit corps (1) et relié audit récepteur ou à d'autres utilisateurs habituels associés audit tracteur.

7. Dispositif selon la revendication 1 ou les revendications 1 et 6, caractérisé en ce qu'il comprend un élément ou vanne (8) logé(e) mobile dans un siège (7) ménagé dans le corps (1, 2) et agencé(e) de manière à être tourné(e) à l'intérieur dudit siège (7) par un frein à main classique de tracteur, ledit élément (8) comprenant des conduits (11, 12, 13) communiquant respectivement avec les conduits (5, 18) transportant le fluide dans la chambre (19) dans laquelle est contenu le carter mobile (20), et avec les canaux (14, 15, 16, 17) prévus dans ledit corps (1), ledit élément (8) étant agencé pour intercepter le fluide atteignant le corps (1) depuis le conduit d'entrée (5) et pour le dévier vers le conduit de décharge, ou pour décharger et équilibrer la pression dans le circuit de freinage de la remorque ou dans le dispositif lui-même.

8. Dispositif selon la revendication 7, caractérisé en ce que l'élément rotatif (8) comprend un bras (9) soumis à l'action du frein à main et un corps (10) comprenant les conduits (11, 12, 13) qui coopèrent avec les canaux (14, 15, 16, 17) ménagés dans le corps (1) du dispositif.

9. Dispositif selon la revendication 7, caractérisé en ce que les canaux ménagés dans le corps (1) comprennent des conduits (14, 15) qui partent d'une cavité (27), dans laquelle se trouve une servosoupape (28), pour rejoindre une section (19A) de la chambre (19) contenant le carter mobile (20), lesdits conduits coopérant avec l'un des conduits (12) prévus dans le corps (10) de l'élément rotatif (8) pour stabiliser la pression de fluide à l'intérieur du dispositif et à l'intérieur du circuit de freinage de la remorque, lesdits canaux comprenant également des conduits (16, 17) coopérant avec l'un des conduits (13) dudit élément rotatif pour décharger le fluide sous pression dans le circuit de freinage de la remorque avant de découpler la remorque du tracteur.

10. Dispositif selon la revendication 1 ou les revendications 1 et 6, caractérisé en ce que le dispositif de pression (101, 210) du piston (42) mobile à l'intérieur du carter (20) consiste en un piston mobile à l'intérieur d'un bloc (4) fixé au corps du dispositif (1), ledit piston se déplaçant dans des canaux (103, 105) séparés l'un de l'autre par une chambre intermédiaire (108), lesdits canaux étant dotés d'éléments d'étanchéité (106, 107), un canal (109) s'étendant depuis ladite chambre (108) pour purger la partie du circuit de freinage du tracteur associée audit bloc (4).

11. Dispositif selon la revendication 10, caractérisé en ce que le dispositif de pression (101) du piston (42) mobile à l'intérieur dudit carter (20) consiste en un piston à double corps.

12. Dispositif selon la revendication 10, caractérisé en ce que le dispositif de pression consiste en un piston (210) soumis à l'action d'un ressort de pression (212) logé dans une cavité (214) du bloc (4) associé au dispositif.

13. Dispositif selon la revendication 10, caractérisé en ce que le dispositif de pression (101, 210) agit sur un élément (46) mobile à l'intérieur d'une extrémité (44) d'une cavité (54) dans le piston (42) à l'encontre d'un ressort (56) inséré dans ladite cavité et coopérant également avec l'extrémité opposée (49) dudit piston, où un conduit (53) communique avec les canaux (51, 52) ménagés dans un élément (50), ledit élément (50) étant associé à ladite extrémité opposée (49) qui débouche sur la paroi (21) du carter (20) à l'intérieur duquel se déplace ledit piston.

14. Dispositif selon la revendication 13, caractérisé en ce que l'élément (50) coopère avec un élément libre (65) mobile à l'intérieur d'un canal (64) dans un membre (61) fixé à une extrémité (62) du carter (20) et soumis à la pression du fluide de retour en provenance du circuit de freinage de la remorque, ledit fluide agissant sur ledit élément mobile dans une cavité (66) dudit membre (61) lorsque la pression dudit fluide atteint une valeur élevée, le fluide parvenant à ladite cavité via un conduit (68A) prévu dans un support (68) mobile par rapport audit membre (61) et portant une tête (69) sur laquelle agit le dispositif de pression (77) associé au raccord (3) pour la remorque.

15. Dispositif selon la revendication 1 ou les revendications 1 et 6, caractérisé en ce que certains des orifices (22, 22A) prévus dans la paroi (21) du carter (20) sont disposés de façon à coopérer avec une chambre (2H) d'un élément de connexion (2) pour le raccord (3), lesdits orifices étant agencés pour coopérer avec des conduits (55) prévus à une extrémité (49) du piston (42) mobile à l'intérieur du carter (20) prévu dans le dispositif.

16. Dispositif selon les revendications 1 et 9, ou les revendications 1, 6 et 9, caractérisé en ce que certains des orifices (23, 23A, 24, 24, 24A) du carter mobile (20) coopèrent avec des évidements (25, 26) ménagés dans le corps (1) du dispositif, l'un de ces évidements communiquant avec le conduit d'entrée et l'autre avec la cavité (27) dans laquelle se trouve la servosoupape (28).

17. Dispositif selon la revendication 1 ou les revendications 1 et 6, caractérisé en ce que le piston (42) se déplace à l'intérieur du carter (20) à l'encontre d'un ressort (60).

18. Dispositif selon la revendication 1 ou les revendications 1 et 6, caractérisé en ce qu'une soupape (91) est associée au corps (1) pour maintenir sous pression le fluide à envoyer à la remorque et pour décharger ledit fluide lorsque sa pression est élevée.

19. Dispositif selon la revendication 18, caractérisé en ce que la soupape (91) comprend, pour un conduit (96) communiquant avec la chambre (19) contenant le carter mobile (20), un élément d'interception (93) soumis à l'action d'un ressort de pression (94), ledit ressort (94) étant situé dans une chambre (95) reliée à un conduit (100) à travers lequel le fluide est envoyé vers le receveur et vers un canal (99) partant de la chambre (19) contenant ledit carter (20).

20. Dispositif selon la revendication 1 ou les revendications 1, 6, 15 et 19, caractérisé en ce qu'il comprend une autre soupape (200) pour décharger le fluide lorsque la pression dans le circuit de freinage de la remorque est élevée, ladite soupape (200) interceptant des conduits (202, 203) communiquant respectivement avec la chambre (2H) du connecteur (2) pour le raccord (3) et avec le conduit de décharge (100).

21. Dispositif selon la revendication 1 ou les revendications 1 et 6, caractérisé en ce qu'il comprend une soupape de purge (110) associée au bloc (4) fixé au corps du dispositif (1).

22. Dispositif selon la revendication 1, caractérisé en ce qu'il comprend un corps (301) et un élément de soupape (310, 390) mobile à l'encontre d'un ressort (326, 401) et en ce qu'il est doté de passages et agencé pour adopter deux états suivant que la remorque est accouplée ou non, l'un desdits passages étant libéré pour permettre le freinage de la remorque dans un premier état correspondant à la remorque accouplée, tandis que dans le second état, c'est-à-dire lorsque la remorque est désaccouplée, la pompe ne peut pas fournir la pression requise pour freiner la remorque.

23. Dispositif selon la revendication 22, caractérisé en ce que le corps (301) présente des passages d'entrée et de sortie (308, 309) débouchant dans une chambre (301A) contenant un élément mobile (310) soumis à l'action de dispositifs de pression classiques associés à la remorque.

24. Dispositif selon la revendication 23, caractérisé en ce que les passages d'entrée et de sortie (308, 309) sont reliés respectivement à une première partie du circuit de freinage du tracteur (332) et à un élément de distribution (335) situé dans une seconde partie dudit circuit comportant la pompe usuelle (336).

25. Dispositif selon la revendication 23, caractérisé en ce que les passages d'entrée et de sortie (308, 309) sont reliés respectivement au récepteur (340) d'une seconde partie du circuit de freinage du tracteur et à la pompe (336) via un distributeur (347).

26. Dispositif selon la revendication 23, caractérisé en ce que les passages d'entrée et de sortie (308, 309) débouchent dans une chambre (389) à l'intérieur d'un élément (380) associé à une partie (302) du raccord, un piston (390) soumis à l'action d'un dispositif de pression usuel sur la remorque se déplaçant à l'intérieur de ladite chambre à l'encontre d'un ressort (391), ledit piston reliant lesdits passages (308, 309) lorsque ladite remorque est reliée au tracteur.

27. Dispositif selon la revendication 26, caractérisé en ce que les passages d'entrée et de sortie (308, 309) sont reliés respectivement à une partie huile végétale du circuit de refroidissement du tracteur et à un distributeur, ce dernier alimentant en fluide de freinage sous pression une chambre (301A) contenant l'élément de soupape mobile (310), ledit fluide pouvant atteindre une sortie (382) dudit dispositif via les passages (318, 320, 321) ménagés dans ledit élément de soupape.

28. Dispositif selon les revendications 24 et 26, caractérisé en ce que l'élément mobile (310) et le piston (390) de l'élément (380) du dispositif comprennent une portion annulaire externe en retrait (317).

29. Dispositif selon la revendication 22, caractérisé en ce que l'élément mobile (310) comprend un évidement externe (317) avec une partie (317A) de différente profondeur pour coopérer avec un élément de soupape (410) associé au conduit d'entrée (308) à l'intérieur du corps (301).

30. Dispositif selon la revendication 26, caractérisé en ce que le corps (301) comprend une partie (302) comportant la chambre (301A) dans laquelle débouchent les conduits d'entrée et de sortie (308, 309), ladite chambre (301A) étant reliée à une autre chambre (322) prévue à l'intérieur d'un écrou à anneau (302A) associé à ladite partie (302).

31. Dispositif selon les revendications 22 et 29, caractérisé en ce que l'élément mobile (310) se déplace à l'intérieur des chambres (301A, 322) dans la partie (302) et dans l'écrou à anneau (302A) du corps (301), ledit élément étant doté d'un conduit interne (318) d'où partent des canaux (320, 321) situés à proximité de sa tête (324), ladite tête (324) coopérant avec les bords internes (330) d'un orifice (331) ménagé dans l'écrou à anneau (302A) lorsque la remorque est déconnectée, lesdits canaux et conduits (318, 320, 321) permettant le transfert du fluide de freinage depuis le tracteur vers la remorque.

32. Dispositif selon l'une ou plusieurs des revendications 22 à 30, caractérisé en ce qu'il est associé ou intégré à un distributeur.

33. Dispositif selon l'une ou plusieurs des revendications 1 à 27, caractérisé en ce que le mouvement du carter (H) détermine l'activation ou la non activation d'un voyant indiquant si la remorque est connectée ou non au tracteur.
